**Europäisches Patentamt**

**European Patent Office**

**Office européen des brevets**

(19)

(11) Veröffentlichungsnummer: **0 031 825 B1**

(12) **EUROPÄISCHE PATENTSCHRIFT**

(45) Veröffentlichungstag der Patentschrift: **23.11.83**

(51) Int. Cl.³: **B 62 D 11/18**

(21) Anmeldenummer: **80901216.4**

(22) Anmeldetag: **10.07.80**

(86) Internationale Anmeldenummer: **PCT/AT 80/00024**

(87) Internationale Veröffentlichungsnummer: **WO 81/00240 (05.02.81 Gazette 81/4)**

(54) **LENKEINRICHTUNG FÜR RAUPENFAHRZEUG.**

(30) Priorität: **12.07.79 AT 4856/79**

(43) Veröffentlichungstag der Anmeldung: **15.07.81 Patentblatt 81/28**

(45) Bekanntmachung des Hinweises auf die Patenterteilung: **23.11.83 Patentblatt 83/47**

(84) Benannte Vertragsstaaten: **CH DE FR LI SE**

(56) Entgegenhaltungen:
**DE - A - 1 755 026**
**DE - A - 1 929 380**
**FR - A - 1 378 878**
**FR - A - 2 284 504**
**GB - A - 1 227 311**
**US - A - 3 199 376**
**US - A - 3 373 636**
**US - A - 3 383 953**

(73) Patentinhaber: **BOMBARDIER-ROTAX GESELLSCHAFT M.B.H. ZWEIGNIEDERLASSUNG WIEN, Donaufelder Strasse 73-79, A-1210 Wien (AT)**

(72) Erfinder: **SCHREINER, Joachim, Am Bichl Nr. 237, A-8101 Gratkorn (AT)**

(74) Vertreter: **Barger, Erich, Dipl.-Ing. Patentanwälte Dipl.-Ing. H. Mitscherlich et al, Dipl.-Ing. K. Gunschmann Dr.rer.nat. Körber Dipl.-Ing. J. Schmidt-Evers Steinsdorfstrasse 10, D-8000 München 22 (DE)**

ACTORUM AG

Lenkeinrichtung für Raupenfahrzeug

Die Erfindung betrifft eine Lenkeinrichtung für ein Raupenfahrzeug, bestehend aus einem Verbrennungskraftmotor mit angebautem Drehzahlumformer und Gelenkwelle sowie einem Lenkgetriebe, bestehend aus je einem Planetengetriebe für jede der beiden Raupenseiten, wobei je ein erster Eingang der Getriebe über die Gelenkwelle mit dem Verbrennungskraftmotor verbunden ist, wobei ferner der Abtrieb jedes Planetengetriebes jeweils zu dem Kettenrad führt, und wobei auf einem jeweils verbleibenden zweiten Eingang des Lenkgetriebes die Lenkung mittels eines vom Motor antreibbaren hydrostatischen Getriebes einwirkt. Eine derartige Lenkeinrichtung ist durch die DE-A-1 755 026 bekannt.

Lenkeinrichtungen für Raupenfahrzeuge gibt es in grosser Anzahl. Beispielsweise werden bei rein mechanischen Lenkeinrichtungen unterschiedliche Raupengeschwindigkeiten durch Verschleissglieder, wie Bremsen und/oder Kupplungen erreicht. Auch Regeltriebe, wie Kettentriebe, Reibradgetriebe oder Keilriementriebe, sind verwendet worden. Diese besitzen meist schlechtes Leistungsgewicht, wodurch die übertragbare Leistung durch das zur Verfügung stehende Bauvolumen begrenzt ist.

Hydrostatische Antriebe besitzen bei kleiner Baugrösse jedoch relativ schlechten Wirkungsgrad, wobei bei grossen zu übertragenden Leistungen thermische und konstruktive Probleme in den Vordergrund treten.

Hydrodynamische Antriebe unterscheiden sich grundsätzlich von hydrostatischen Antrieben, da bei letzteren eine bestimmte, gegebenenfalls einstellbare, jedoch zwischen den Einstellungen unveränderbare Übersetzung vorliegt, während bei ersteren die Übersetzung von der Leistung abhängt.

Bei gleichem Füllungsgrad ist die Übersetzung drehzahlabhängig.

Bei Lenkgetrieben wird daher ein hydrodynamischer Antrieb als hydraulische Kupplung oder als hydraulische Bremse (vgl. DE-A-1 755 026 bzw. GB-A-1 227 311).

Die bekannten Lenkeinrichtungen weisen eine sogenannte Null-Welle auf. Die beiden Mischgetriebe werden daher bei Geradeausfahrt mit gleicher Geschwindigkeit angetrieben, wobei sich die Null-Welle in Ruhe befindet. Zur Sicherung der Geradeausfahrt kann sie sogar durch eine Bremse festgestellt werden. Bei Kurvenfahrt wird die Null-Welle angetrieben und erteilt dem einen Mischgetriebe eine höhere und dem anderen eine um den gleichen Betrag niedrigere Drehzahl. Alternativ kann die Drehzahl des einen Mischgetriebes konstant und die des anderen Mischgetriebes erhöht oder erniedrigt werden.

Systembedingt können die bekannten hydrodynamischen Systeme nicht durch ein hydrostatisches System ersetzt werden. Wenn jedoch hydrostatische Antriebe erwünscht sein sollten, so sind weitere Mischgetriebe vorzusehen (vgl. US-A-3 199 376 und DE-A-1 929 380). Daraus folgt, dass die Anwendung eines hydrostatischen Lenkantriebes nur zu einer komplizierteren Ausführung der Lenkeinrichtung führen würde. Ferner ist zu bemerken, dass bei den bekannten Lenkeinrichtungen durch die Null-Welle ein zusätzlicher Antrieb auch ausserhalb des Lenkmanövers nicht möglich ist.

Es ist daher Aufgabe der Erfindung, eine Lenkeinrichtung der im Oberbegriff des Anspruchs 1 genannten Art anzugeben, die einfach aufgebaut ist.

Die Aufgabe wird erfindungsgemäss dadurch gelöst, dass für jede Raupenseite ein vom Verbrennungskraftmotor angetriebener hydrostatischer Antrieb vorgesehen ist und mit dem zweiten Eingang des Lenkgetriebes unmittelbar verbunden ist.

Wesentlich ist somit, dass der hydrostatische Antrieb unmittelbar auf die Mischgetriebe einwirkt, wobei die erfindungsgemässe Lenkeinrichtung von geradezu klassischer Einfachheit ist.

Ferner lassen sich durch die erfindungsgemässe Lenkeinrichtung Wirkungen erzielen, die bei den bekannten Lenkeinrichtungen ausgeschlossen sind. Bei der Erfindung kann jedoch entweder nur mit hydrostatischem Antrieb gearbeitet werden, und zwar auch bei Geradeausfahrt, oder es kann bei einem Stufenschaltgetriebe mittels des hydrostatischen Antriebes die unmittelbar vom Motor abgeleitete Geschwindigkeit zusätzlich erhöht oder erniedrigt werden.

Würde jeder Raupenseite bzw. jedem Kettenrad ein hydrostatisches Getriebe zugeordnet werden, würden sie einen Zweig in der Antriebsverbindung zwischen dem Planetengetriebe und dem Kettenrad darstellen, wodurch lediglich eine Drehung um die Hochachse erreichbar wäre.

Durch die erfindungsgemäss ausgebildete Lenkeinrichtung mit dem Antrieb der hydrostatischen Getriebe unmittelbar vom Motor und deren unmittelbarer Anschluss an den zweiten Zweig der Planetengetriebe sind folgende Vorteile erreichbar:

bei eingestellter Schaltstufe des Ganggetriebes eine zusätzliche Erhöhung oder Verringerung der Fahrtgeschwindigkeit;

drehen um eine Kette;

Verringerung des Verschleisses der hydrostatischen Getriebe bei Gerdeausfahrt durch Nullförderung;

stillsetzen des mechanischen Antriebes der Planetengetriebe und Fahren und Lenken nur mittels der hydrostatischen Getriebe.

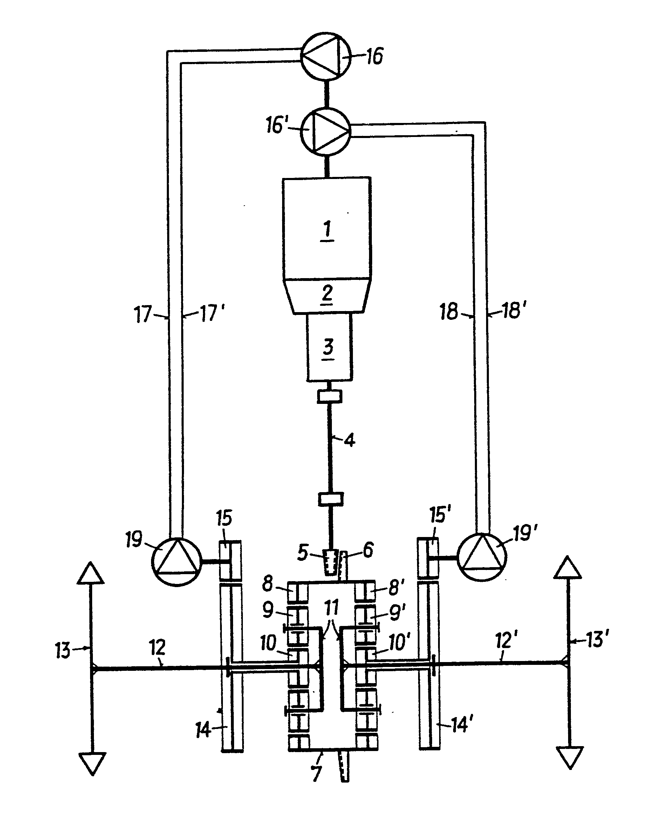

In der Zeichnung ist der Gegenstand der Erfindung in einer beispielsweisen Ausführungsform schematisch dargestellt.

Der Verbrennungskraftmotor 1 dient als Kraftquelle. An ihm ist hinten ein Automatikgetriebe, bestehend aus Wandler 2 und Getriebe 3, angeflanscht. Bei einer einfacheren Ausführung kann statt des Automatikgetriebes auch ein normales Schaltgetriebe mit Kupplung verwendet werden. In diesem Fall ist das Schaltgetriebe abtriebseitig mit einer Bremse auszustatten, um die Abtriebswelle blockieren zu können, was beim Automatikgetriebe bereits die «Parkstellung» bewirkt.

Die Gelenkwelle 4 verbindet den Triebwerksblock vorne mit dem Lenkgetriebe.

Das Lenkgetriebe besteht aus Triebling 5 und Tellerrad 6. Dieses ist auf einer Hohlwelle 7 angeflanscht. Die Hohlwelle 7 trägt in ihrem Innern zwei
Hohlräder 8 und 8', welche zum linken bzw. rechten
Planetengetriebe des Lenkgetriebes gehören. Die
Planetenräder 9 und 9' kämmen einerseits in den
Hohlrädern 8 und 8', andererseits in den Sonnenrädern 10 und 10' und sind in den Planetenträgern 11
und 11' gelagert. Die Planetenträger 11 und 11' sind
mit den Abtriebswellen 12 und 12' verbunden, auf
deren Enden schematisch die Kettenräder 13 und
13' angedeutet sind. In der Praxis ist vor den Kettenrädern 13 und 13' meist noch ein Vorgelegegetriebe
angeordnet.

Die Sonnenräder 10 und 10' sind mit den Vorgelegezahnrädern 14 und 14' verbunden, welche wiederum mit den Vorgelegeritzeln 15 und 15' kämmen.

Dieses Vorgelegegetriebe ist als Stirnradgetriebe
dargestellt, kann selbstverständlich auch aus Kegelrädern, Kettentrieb oder einem Schneckentrieb bestehen. Massgebend ist die erforderliche Untersetzung, der konstruktive Aufbau oder auch der gewünschte Wirkungsgrad. Wenn ein gewisses Stützmoment erwünscht ist, empfiehlt sich die Verwendung eines Schneckengetriebes, der bekanntlich bei
treibendem Schneckenrad einen anderen Wirkungsgrad zeigt als bei treibender Schnecke.

Die Lagerstellen des Lenkgetriebes wurden zugunsten einer deutlicheren Darstellung weggelassen.

Am linken und rechten Vorgelegegetriebe der Planetengetriebe greift jeweils ein eigenes hydrostatisches Getriebe an. Dieses besteht aus den Pumpen
16 und 16', den Hochdruckleitungen 17 und 17', 18
und 18' sowie den Motoren 19 und 19'.

Die Pumpen 16 und 16' sind vorne am Verbrennungskraftmotor 1 angeflanscht und werden von
diesem angetrieben. Die Pumpen 16 und 16' sind in
ihrer Fördermenge verstellbar und der Förderstrom
reversierbar.

Die Motoren 19 und 19' sind reversierbar und können bezüglich ihrer Schluckmenge konstant oder
verstellbar sein.

Folgende Betriebsarten dieser Lenkeinrichtung
sind denkbar, wobei die hydrostatischen Getriebe
immer die Lenkung übernehmen.

Wenn das Fahrzeug rein hydrostatisch betrieben
wird, ist am Automatikgetriebe die Schaltposition
«Parkstellung» zu verwenden oder beim Schaltgetriebe die Gelenkwelle 4 mittels Bremse — nicht dargestellt — festzuhalten. Bei dieser Betriebsart kann
das Fahrzeug vorwärts und rückwärts, geradeaus, in
Radien oder um die eigene Achse fahren. Die erzielbaren Geschwindigkeiten sind, je nach Auslegung
der hydrostatischen Antriebe gering — dem Geländebetrieb entsprechend.

Wird das Fahrzeug hauptsächlich über das Automatikgetriebe betrieben, werden die hydrostatischen Antriebe nur zum Lenken benötigt.

Es kann jedoch auch mit Hilfe des hydrostatischen
Antriebes die Drehzahl des Automatikgetriebes ins
Langsame oder Schnelle überlagert werden. Im niedersten Gang des Automatikgetriebes kann dabei
durch die hydrostatischen Antriebe die Fahrgeschwindigkeit noch weiter reduziert werden. In gleicher Weise kann auch im höchsten Gang des Automatikgetriebes die Fahrzeuggeschwindigkeit weiter gesteigert werden. Auch in den einzelnen Gängen ist
eine Überlagerung ins Schnelle oder Langsame möglich, neben der normalen Lenkfunktion der hydrostatischen Antriebe.

Die Dimensionierung der hydrostatischen Antriebe
und des Automatik- oder Schaltgetriebes hängt davon ab, welche Eigenschaften das Fahrzeug besitzen
soll.

·Eine sehr einfache Lösung des hydrostatischen
Antriebes kann auch mit einfacher Zahnradpumpe
und Motoren unter Zwischenschaltung von Hydraulikventilen erfolgen, wobei dann Abstriche bei der
stufenlosen Regelbarkeit der Lenkung zu machen
sein werden.

**Patentansprüche**

1. Lenkeinrichtung für ein Raupenfahrzeug, bestehend aus einem Verbrennungskraftmotor (1) mit
angebautem Drehzahlumformer (3) und Gelenkwelle
(4) sowie einem Lenkgetriebe, bestehend aus je einem Planetengetriebe (8, 9, 10, 11; 8', 9', 10', 11')
für jede der beiden Raupenseiten, wobei je ein erster
Eingang (7) der Getriebe über die Gelenkwelle (4) mit
dem Verbrennungskraftmotor (1) verbunden ist, wobei ferner der Abtrieb (12, 12') jedes Planetengetriebes (8, 9, 10, 11; 8', 9', 10', 11') jeweils zu dem Kettenrad führt und wobei auf einem jeweils verbleibenden zweiten Eingang (14, 14') des Lenkgetriebes die
Lenkung mittels eines vom Motor antreibbaren hydrostatischen Getriebes (16, 17, 17', 19; 16', 18,
18', 19') einwirkt, dadurch gekennzeichnet, dass für
jede Raupenseite ein vom Verbrennungskraftmotor
(1) angetriebener hydrostatischer Antrieb vorgesehen ist mit dem zweiten Eingang des Lenkgetriebes unmittelbar verbunden ist.

2. Lenkeinrichtung nach Anspruch 1, dadurch gekennzeichnet, dass eine Pumpe über Hydraulikventile auf zwei Motoren einwirkt.

3. Lenkeinrichtung nach Anspruch 1 oder 2, dadurch gekennzeichnet, dass als Drehzahlumformer
(3) ein Automatikgetriebe mit Parkeinstellung oder
ein Handschaltgetriebe mit zusätzlicher, auf die Getriebeausgangsstelle wirkende Bremse vorgesehen
ist.

**Claims**

1. Steering arrangement for a track-laying vehicle
consisting of an internal combustion engine (1) having a speed converter (3) and a drive shaft (4)
mounted thereon and also a steering gear, consisting
of a respective planetary gear system (8, 9, 10, 11;
8', 9', 10', 11') for each of the two track sides,
wherein in each case a first input (7) of the gear system in connected with the internal combustion engine (1) by way of the drive shaft (4), wherein, furthermore, the power-take-off (12, 12') of each planetary gear system (8, 9, 10, 11; 8', 9', 10', 11')
leads ot the respective track wheel and wherein the
steering acts in each case upon a remaining second
input (14, 14') of the steering gear by means of a
hydrostatic drive (16, 17, 17', 19; 16', 18, 18', 19') which is driven by the motor, characterised in that for each track side there is provided a hydrostatic driving mechanism, which is driven by the internal combustion engine (1) and wich is directly connected with the second input of the steering gear.

2. Steering arrangement according to claim 1, characterised in that a pump acts on two motors by way of hydraulic valves.

3. Steering arrangement according to claim 1 or 2, characterised in that as a speed converter (3) there is provided an automatic gear unit having a parking setting or a manual shift gear unit having an additional brake which acts on the output side of the gear unit.

**Revendications**

1. Dispositif de direction pour véhicule à chenilles composé d'un moteur à combustion interne (1), comportant un convertisseur de vitesse de rotation (3) rapporté et un arbre à cardan (4) ainsi qu'une boîte de direction, composée chaque fois d'un train planétaire (8, 9, 10, 11; 8', 9', 10', 11') pour chacun des deux côtés à chenilles, une première entrée (7) du train étant toujours reliée par l'arbre à cardan (4) au moteur à combustion interne (1), cependant que, par ailleurs, la sortie (12, 12') de chaque train planétaire (8, 9, 10, 11; 8', 9', 10', 11') mène respectivement au barbotin, cependant que, sur une deuxième entrée (14, 14'), restant respectivement de la boîte de direction, la direction agit au moyen d'une transmission hydrostatique (16, 17, 17', 19; 16', 18, 18', 19') pouvant être entraînée par le moteur, caractérisé en ce que, pour chaque côté à chenille, il est prévu un entraînement hydrostatique entraîné par le moteur à combustion interne (1), cet entraînement étant relié directement à la deuxième entrée de la boîte de direction.

2. Dispositif de direction suivant la revendication 1, caractérisé en ce qu'une pompe agit, par l'intermédiaire de valves hydrauliques, sur deux moteurs.

3. Dispositif de direction suivant l'une quelconque des revendications 1 et 2, caractérisé, en ce que, comme convertisseur de vitesse de rotation (3), il est prévu une boîte automatique avec position de stationnement ou une boîte à commande manuelle avec un frein supplémentaire agissant à la sortie de la boîte.